# EUROPÄISCHE PATENTSCHRIFT

(11) **EP 2 419 195 B1**
(45) Veröffentlichungstag und Bekanntmachung des Hinweises auf die Patenterteilung: **05.06.2013**
(21) Anmeldenummer: 10713223.5
(22) Anmeldetag: 12.04.2010
(51) Int. Cl.: B01D 53/26, B01D 5/00, E03B 3/28

(54) **VORRICHTUNG UND VERFAHREN ZUR KONDENSATION VON WASSER**
DEVICE AND METHOD FOR CONDENSING WATER
DISPOSITIF ET PROCÉDÉ POUR LA CONDENSATION D'EAU

(30) Priorität: 17.04.2009 DE 102009017840
(43) Veröffentlichungstag der Anmeldung: 22.02.2012
(73) Patentinhaber: Siemens Aktiengesellschaft, 80333 München (DE)
(72) Erfinder: MIELKE, Jürgen, 96049 Bamberg (DE); STRÄTZ, Klaus, 96191 Trunstadt (DE)
(86) Internationale Anmeldenummer: PCT/EP2010/054758
(87) Internationale Veröffentlichungsnummer: WO 2010/119008

(56) Entgegenhaltungen:
- EP-A1- 0 419 007
- WO-A2-2008/018071
- DE-A1- 4 435 642
- DE-A1- 10 107 533
- DE-A1- 19 804 682
- DE-A1- 19 849 216
- DE-C- 519 618
- US-A- 4 600 416

## Beschreibung

Die Erfindung betrifft eine Vorrichtung und ein Verfahren zur Kondensation von Wasser aus Wasserdampf oder aus einem Wasserdampf enthaltenden Gas.

Es ist bereits bekannt, Wasser aus Wasserdampf oder einem Wasserdampf enthaltenden Gas durch Abkühlen des Wasserdampfs oder Wasserdampf enthaltenden Gases zu kondensieren und abzuscheiden, indem zum Abkühlen Kühlwasser verwendet wird. Bei diesem ersten bekannten Verfahren wird Wärme an das Kühlwasser abgeführt und dieses anschließend in einem Kühlturm rückgekühlt, wobei beträchtliche Mengen an Wasser durch Verdunstung verloren gehen.

Alternativ ist es bereits bekannt, eine Kondensation von Wasser aus Wasserdampf oder einem Wasserdampf enthaltendem Gas in einem geschlossenen Kreislauf durchzuführen, wobei der Wasserdampf oder das Wasserdampf enthaltende Gas mittels eines gasförmigen Kühlmediums, wie beispielsweise Kühlluft, gekühlt wird. Das kondensierte Wasser wird aufgefangen und einer weiteren Nutzung zugeführt. Allerdings ist dieses zweite Verfahren mit erheblich höheren Betriebskosten verbunden als das erste Verfahren

Sowohl bei der Durchführung des ersten wie auch des zweiten Verfahrens gehen beträchtliche Mengen an thermischer Energie ungenutzt verloren.

Die DE 44 35 642 A1 offenbart eine Vorrichtung zur Kondensation von Wasser aus einem Wasserdampf enthaltenden Gas mit einem Behälter, dessen Inneres durch eine Wärmeübergangszone aus Kohle in einen ersten Bereich und einen zweiten Bereich unterteilt ist, und wobei eine erste Öffnung für den Einlas von feuchtem Gas in den ersten Bereich mündet und eine zweite sowie eine dritte Öffnung in den zweiten Bereich münden und der Abfuhr von getrocknetem Gas und Kondensat dienen. Bei der Trocknung wird durch Drehung der Kohlenschicht die Zentrifugalkraft für die Abscheidung des Kondensats genutzt.

Es ist daher Aufgabe der Erfindung, eine Vorrichtung und ein Verfahren zur Kondensation von Wasser bereitzustellen, die eine wirtschaftlichere Nutzung der thermischen Energie und des Wassers in Wasserdampf oder Wasserdampf enthaltendem Gas ermöglichen.

Die Aufgabe wird für die Vorrichtung zur Kondensation von Wasser aus Wasserdampf oder aus einem Wasserdampf enthaltenden Gas gelöst mit den Merkmalen des Anspruchs 1.

Unter einem durchströmbaren Bereich einer Wärmeübergangszone wird dabei verstanden, dass die Wärmeübergangszone dort Kanäle und/oder eine offene Porosität aufweist und somit eine Gas- und/oder Wasserdampfdurchlässigkeit vorliegt.

Die Aufgabe wird für das Verfahren zur Kondensation von Wasser aus Wasserdampf oder aus einem Wasserdampf enthaltenden Gas gelöst, indem unter Verwendung der erfindungsgemäßen Vorrichtung abwechselnd folgende Zyklen erfolgen:
Durchführen eines Kondensationszyklus durch
Einleiten eines ersten Prozessgases in Form von Wasserdampf oder eines Wasserdampf enthaltenden Gases über die mindestens eine erste Öffnung in die erste Zone des Behälters;
Überführen des ersten Prozessgases durch die Wärmeübergangszone hindurch in die zweite Zone unter Kondensation von Wasser und Erwärmung der Wärmeübergangszone;
Ableiten des kondensierten Wassers durch die mindestens eine dritte Öffnung des Behälters und des gasförmigen Rests des ersten Prozessgases durch die mindestens eine zweite Öffnung des Behälters; und
Durchführen eines Anblaszyklus durch
Einleiten eines zweiten Prozessgases in Form von Kühlgas über mindestens die mindestens eine zweite Öffnung in die zweite Zone des Behälters;
Überführen des zweiten Prozessgases durch die Wärmeübergangszone hindurch in die erste Zone unter Abkühlung der Wärmeübergangszone;
Ableiten des erwärmten zweiten Prozessgases durch die mindestens eine erste Öffnung des Behälters.

Die erfindungsgemäße Vorrichtung weist eine einfache Bauart auf und ist somit kostengünstig herstellbar. Die Vorrichtung und das erfindungsgemäße Verfahren ermöglichen eine wesentlich bessere Ausnutzung der thermischen Energie und des Wassers, welche in Wasserdampf oder Wasserdampf enthaltendem Gas gespeichert sind, als dies mit bisher bekannten Verfahren und Vorrichtungen möglich war. Zudem sind die Betriebskosten der erfindungsgemäßen Vorrichtung und des erfindungsgemäßen Verfahren gegenüber denen von bisher eingesetzten Vorrichtungen und Verfahren deutlich vermindert.

Das kondensierte Wasser ist im Normalfall reines Wasser oder nahezu reines Wasser und kann meist unmittelbar einem industriellen Prozess, beispielsweise als Speisewasser, zugeführt bzw. wieder zugeführt werden. Das kondensierte Wasser kann aber, falls erforderlich, alternativ auch einer Qualitätskontrolle und/oder einer Aufbereitung zugeführt werden. Dies ist insbesondere dann von Vorteil, wenn ein bestimmter Reinheitsgrad, pH-Wert und dergleichen für die weitere Nutzung des kondensierten Wassers von Bedeutung ist.

Bevorzugte Ausgestaltungen der Vorrichtung und des Verfahrens sind in den Unteransprüchen angegeben und werden nachfolgend im Detail erläutert.

Für die Vorrichtung hat es sich bewährt, wenn der Behälter eine Längsachse aufweist und die Längsachse sich durch den Mittelpunkt oder Schwerpunkt der mindestens einen ersten Öffnung und der mindestens einen zweiten Öffnung erstreckt. Weiterhin hat es sich als vorteilhaft erwiesen, den Behälter, mit einem rotationssymmetrischen Umfang auszubilden, wobei die Längsachse als Rotationsachse dient. Besonders bevorzugt ist ein Behälter mit einem kreisförmigen Umfang ausgebildet, der auf seiner Unterseite mit einer ebenen, gewölbten oder kegelförmigen Bodenplatte und auf seiner Oberseite mit einem hauben- oder kegelförmigen Abschluss versehen ist. Der Behälter ist bevorzugt aus Stahl ausgebildet.

Es hat sich weiterhin bewährt, die mindestens eine erste Öffnung und die mindestens eine dritte Öffnung im Bereich einer Unterseite des Behälters anzuordnen und weiterhin die mindestens eine zweite Öffnung im Bereich einer Oberseite des Behälters anzuordnen. Die mindestens eine dritte Öffnung ist dabei besonders bevorzugt an der tiefsten Stelle des Behälters, wie beispielsweise in der Bodenplatte des Behälters, angeordnet. So kann kondensiertes Wasser, das sich dort aufgrund der Schwerkraft sammelt, unmittelbar und ohne weitere Hilfsmittel, wie Pumpen oder dergleichen, abfließen.

Insbesondere hat sich eine Anordnung der mindestens einen ersten Öffnung, welche unter anderem zum Einleiten von Wasserdampf oder Wasserdampf enthaltendem Gas dient, im Zentrum der Bodenplatte des Behälters bewährt. Die mindestens eine dritte Öffnung wird in Folge bevorzugt auf einem Radius um die zentral angeordnete, mindestens eine erste Öffnung herum angeordnet. Die mindestens eine zweite Öffnung bildet bevorzugt das Ende des hauben- oder kegelförmigen Abschlusses an einer Oberseite des Behälters. Dabei ist die mindestens eine erste Öffnung vorteilhafter Weise fluchtend zur mindestens einen zweiten Öffnung angeordnet.

Aber auch andere Anordnungen der mindestens einen ersten, zweiten und dritten Öffnungen sind je nach Bauart des Behälters verwendbar. So kann ein langgestreckter Behälter auch liegend anstatt aufrecht stehend eingesetzt werden. In einem solchen Fall ist die mindestens eine erste Öffnung bevorzugt an einer Seite und die mindestens eine zweite Öffnung bevorzugt auf der dazu gegenüber liegenden Seite angeordnet. Die mindestens eine dritte Öffnung wird bevorzugt im Bereich der Behältermitte an der untersten Stelle des Behälters angeordnet.

Weiterhin hat es sich bewährt, wenn ein Leitsystem in Form von beispielsweise Stegen, Rinnen oder dergleichen im Bereich der Unterseite des Behälters angeordnet ist, die kondensierendes Wasser zuverlässig in Richtung der mindestens einen dritten Öffnungen ableiten.

Die Wärmeübergangszone erstreckt sich vorzugsweise ausgehend von dem Bereich des Behälters, in welchem sich die mindestens eine erste Öffnung befindet, wie beispielsweise eine Unterseite, insbesondere Bodenplatte, des Behälters, rohrförmig in Richtung der mindestens einen zweiten Öffnung. Dabei beherbergt die Wärmeübergangzone die erste Zone und bildet beispielsweise ein haubenförmiges Gebilde über der mindestens einen ersten Öffnung. Das der mindestens einen ersten Öffnung im Behälter abgewandte Ende der Wärmeübergangszone verschließt den rohrförmigen Bereich und ist dabei entweder eben, kegel- oder kuppelförmig ausgebildet.

Bevorzugt ist der rohrförmige Bereich der Wärmeübergangszone durchströmbar ausgebildet. Das den rohrförmigen Bereich verschließende Ende kann dabei ebenfalls durchströmbar ausgebildet oder aber undurchlässig für Wasserdampf oder das Wasserdampf enthaltende Gas ausgeführt sein.

Ein ebenes Ende wird insbesondere durch eine Isolierplatte gebildet, welche für den Wasserdampf oder das Wasserdampf enthaltende Gas undurchlässig ist. Eine solche Isolierplatte ist bevorzugt aus einem Material mit geringer Wärmeleitfähigkeit gebildet, das insbesondere im Temperaturbereich bis 300°C eine Wärmeleitfähigkeit von maximal 20 W(mK)⁻¹ aufweist, wie beispielsweise Schmelzkorund.

Der durchströmbare Bereich der Wärmeübergangszone umfasst insbesondere mindestens eine Schüttgutschicht und/oder mindestens eine Faserschicht und/oder mindestens eine textile Schicht und/oder mindestens eine Gitterschicht und/oder mindestens eine Netzschicht und/oder mindestens ein Lochblech.

Zur Ausbildung einer Schüttgutschicht hat sich insbesondere keramisches und/oder polymeres Material als geeignet erwiesen, wie beispielsweise AlN, Graphit-gefüllte Kunststoffe und dergleichen. Geeignete Fasern zur Ausbildung einer Faserschicht sind beispielsweise aus Metall, insbesondere Stahl gebildet. Gitter- und Netzschichten sind bevorzugt aus Metalldraht gebildet, insbesondere aus Stahl. Eine Kombination von Schüttgut und Gitter- oder Netzschichten, von Schüttgut und Lochblech, von Schüttgut, Fasern und Gitter- und Netzschichten oder von Schüttgut, Fasern und Lochblech ist besonders bevorzugt.

Erfindungsgemäβ weist der durchströmbare Bereich der Wärmeübergangszone zumindest teilweise Materialien auf, die im Temperaturbereich bis 300°C eine Wärmeleitfähigkeit von grö-βer als 20 W(mK)⁻¹, insbesondere größer als 20 W(mK)⁻¹, aufweisen.

Es hat sich bewährt, den durchströmbaren Bereich der Wärmeübergangszone auf ihrer der ersten Zone zugewandten Oberfläche zumindest teilweise mit einer durchströmbaren ersten Trennschicht und/oder auf ihrer der zweiten Zone zugewandten Oberfläche zumindest teilweise mit einer durchströmbaren zweiten Trennschicht auszustatten.

Bevorzugt wird eine Wärmeübergangszone gebildet, indem konzentrische Röhren aus Gitter, Netz oder Lochblech gebildet werden, welche jeweils eine Trennschicht bereitstellen. Zwischen den Röhren bildet sich ein Ringspalt aus, in dem eine Schüttgutschicht und/oder Faserschicht durch Einfüllen von Schüttgut und/oder Fasern gebildet wird. Die Maschen der Gitter oder Netze bzw. die Löcher der Lochbleche sind dabei derart zu dimensionieren, dass das eingefüllte Schüttgut und/oder die Fasern nicht durch diese hindurch gelangen können.

Unter einer textilen Schicht wird hier ein einlagiges oder mehrlagiges Gewirk, Gestrick, Gewebe oder Vlies verstanden. Dieses kann aus keramischen Fasern bzw. Fäden und/oder Glasfasern und/oder Metallfasern und/oder Kunststofffasern gebildet sein.

Weiterhin ist es von Vorteil, mehrere unterschiedlich ausgestaltete durchströmbare Bereiche ausgehend von der ersten Öffnung entlang der ersten Zone und/oder mehrere unterschiedlich ausgestaltete durchströmbare Schichten ausgehend von der ersten Zone in Richtung der zweiten Zone aufeinander folgend in der Wärmeübergangszone anzuordnen. Die unterschiedlichen durchströmbaren Bereiche und/oder Schichten unterschieden sich insbesondere hinsichtlich ihrer Porosität und/oder Wärmeleitfähigkeit und/oder Schüttdichte und/oder Korngrößenoder Faserlängenverteilung und dergleichen.

Bei dem Verfahren hat es sich als vorteilhaft erwiesen, im Anblaszyklus vor dem Einleiten des zweiten Prozessgases die mindestens eine dritte Öffnung zu schließen und nach Durchführung des Anblaszyklus die mindestens eine dritte Öffnung wieder zu freizugeben. Durch das Schließen der mindestens einen dritten Öffnung wird zuverlässig verhindert, dass das zweite Prozessgas zumindest teilweise ungenutzt durch die mindestens eine dritte Öffnung entweicht.

Alternativ zu einem Schließen der mindestens einen dritten Öffnung kann ein Entweichen von zweitem Prozessgas durch die mindestens eine dritte Öffnung auch verhindert werden, wenn im Bereich der mindestens einen dritten Öffnung ein Gegendruck aufgebaut wird. Dies kann beispielsweise dadurch erfolgen, dass das zweite Prozessgas nicht nur über die mindestens eine zweite Öffnung, sondern auch über die mindestens eine dritte Öffnung in den Behälter eingeleitet wird.

Die optimale Taktung von Kondensations- und Anblaszyklus hängt dabei von der geometrischen Ausgestaltung der Vorrichtung, der Materialwahl zur Ausbildung der Vorrichtung und weiterhin den konkreten Prozessparametern, wie der Menge und Temperatur des ersten Prozessgases, der Menge an kondensierendem Wasser, der Temperatur des zweiten Prozessgases, usw. ab und ist experimentell in einfacher Weise für eine jede Vorrichtung zu bestimmen.

Die FIGen 1 bis 4 sollen mögliche Vorrichtungen und mögliche Verfahren beispielhaft erläutern. So zeigt:
- FIG 1: einen Längsschnitt durch eine erste Vorrichtung im Kondensationszyklus;
- FIG 2: einen Längsschnitt durch die erste Vorrichtung gemäß FIG 1 im Anblaszyklus.
- FIG 3: einen Längsschnitt durch eine zweite Vorrichtung im Kondensationszyklus; und
- FIG 4: einen Längsschnitt durch die zweite Vorrichtungsgemäß FIG 3 im Anblaszyklus.

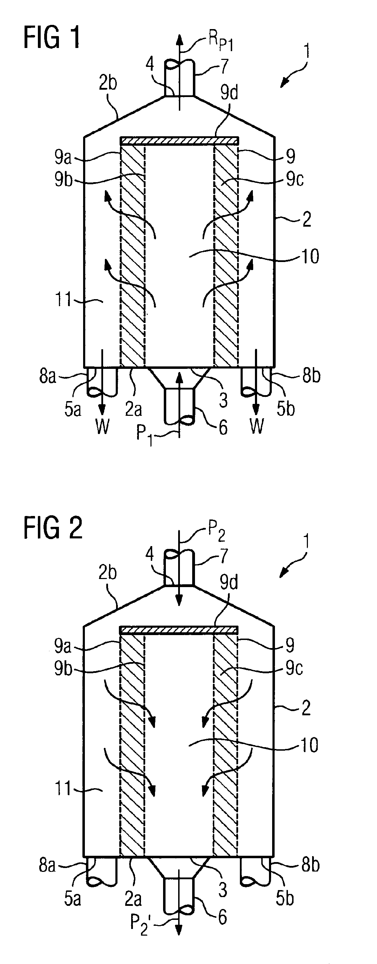

FIG 1 zeigt einen Längsschnitt durch eine erste Vorrichtung 1 zur Kondensation von Wasser aus Wasserdampf oder einem Wasserdampf enthaltenden Gas im Kondensationszyklus. Die erste Vorrichtung 1 weist einen Behälter 2 aus Edelstahl auf, welcher einen kreisförmigen Umfang, eine Unterseite 2a in Form einer ebenen Bodenplatte und eine Oberseite 2b in Form eines kegelförmigen Abschlusses aufweist. In der Unterseite 2a des Behälters 2 befinden sich mittig eine erste Öffnung 3 und auf einem Radius um diese gruppieren mehrere dritte Öffnungen 5a, 5b, wobei in dieser Ansicht lediglich zwei dritte Öffnungen erkennbar sind. An die erste Öffnung 3 schließt sich eine erste Anschlussleitung 6 an. An die dritten Öffnungen 5a, 5b schließen sich dritte Anschlussleitungen 8a, 8b an. In der Oberseite 2b des Behälters 2 ist mittig eine zweite Öffnung 4 ausgebildet, an die sich eine zweite Anschlussleitung 7 anschließt. Der Behälter 2 weist eine Längsachse auf, wobei die Längsachse sich durch die Mittelpunkte der ersten Öffnung 3 und der zweiten Öffnung 4 erstreckt.

Im Inneren des Behälters 2 ist eine Wärmeübergangszone 9 angeordnet, welche das Innere des Behälters 2 in eine erste Zone 10 und eine zweite Zone 11 unterteilt. Die erste Öffnung 3 mündet somit in die erste Zone 10, während die zweite Öffnung 4 sowie die dritten Öffnungen 5a, 5b in die zweite Zone 11 münden. Die Wärmeübergangszone 9 erstreckt sich ausgehend von der Unterseite 2a des Behälters 2 rohrförmig im Inneren des Behälters 2 in Richtung der zweiten Öffnung 4 und endet an ihrem der Unterseite 2a des Behälters 2 abgewandten Ende in einer Isolationsplatte 9d. Die Isolationsplatte 9d aus Schmelzkorund gebildet. Im rohrförmigen Bereich der Wärmeübergangszone 9 sind eine erste Trennschicht 9a und eine zweite Trennschicht 9b angeordnet, je in Form einer Röhre aus Edelstahlgitter, sowie eine im Ringspalt zwischen diesen angeordnete und fixierte Schüttgutschicht 9c. Die Schüttgutschicht 9c ist aus AlN ausgebildet.

Bei dem Verfahren zur Kondensation von Wasser aus Wasserdampf oder Wasserdampf enthaltendem Gas unter Verwendung der Vorrichtung 1 erfolgt zuerst ein Kondensationszyklus. Dabei wird ein erstes Prozessgas P₁ in Form von Wasserdampf oder Wasserdampf enthaltendem Gas über die erste Anschlussleitung 6 durch die erste Öffnung 3 in die erste Zone 10 des Behälters 2 eingeleitet. Anschließend wird das erste Prozessgas P₁ durch den rohrförmigen, durchströmbaren Bereich der Wärmeübergangszone 9 hindurch in die zweite Zone 11 überführt (gekennzeichnet durch Pfeile). Dabei erfolgen eine Abkühlung des ersten Prozessgases P₁ und eine Kondensation von Wasser W. Gleichzeitig erfolgt eine Erwärmung der Wärmeübergangszone 9. Das kondensierte Wasser W fließt entsprechend der Schwerkraft in Richtung der Unterseite 2a des Behälters 2 und wird durch die dritten Öffnungen 5a, 5b des Behälters 2 in die dritten Anschlussleitungen 8a, 8b abgeleitet. Hier kann weiterhin ein nicht dargestelltes Leitsystem in Form von beispielsweise Stegen, Rinnen oder dergleichen angeordnet sein, die das kondensierte Wasser W zuverlässig in die dritten Öffnungen 5a, 5b ableiten. Das kondensierte Wasser W kann nun, beispielsweise als Speisewasser, unmittelbar oder nachdem es einer Qualitätskontrolle und Aufbereitung unterzogen wurde, einem industriellen Prozess zur weiteren Nutzung zugeführt oder wieder zugeführt werden.

Der im Vergleich zum ersten Prozessgas P₁ kühlere gasförmige Rest R_{P1} des ersten Prozessgases P₁ wird durch die zweite Öffnung 4 des Behälters 2 abgeführt, beispielsweise an die Umgebung.

FIG 2 zeigt den gleichen Längsschnitt durch die erste Vorrichtung gemäß FIG 1, jedoch im Anblaszyklus. Gleiche Bezugszeichen kennzeichnen dabei gleiche Elemente. Im Anblaszyklus wird ein zweites Prozessgas P₂ in Form von Kühlluft über die zweite Anschlussleitung 7 und die zweite Öffnung 4 in die zweite Zone 11 des Behälters 2 eingeleitet. Um ein Entweichen des zweiten Prozessgases P2 durch die dritten Öffnungen 5a, 5b während des Einleitens des zweiten Prozessgases P₂ in die zweite Zone 11 des Behälters 2 zu verhindern, werden die dritten Öffnungen 5a, 5b mittels jeweils eines nicht gesondert dargestellten Ventils verschlossen. Das zweite Prozessgas P₂ wird durch den rohrförmigen, durchströmbaren Bereich der Wärmeübergangszone 9, welche zuvor mittels des ersten Prozessgases P₁ erwärmt worden ist, hindurch in die erste Zone 10 des Behälters 2 überführt (gekennzeichnet durch Pfeile). Dabei erfolgen eine Abkühlung der Wärmeübergangszone 9 und eine Erwärmung des zweiten Prozessgases P₂.

Schließlich wird das erwärmte zweite Prozessgas P₂' durch die erste Öffnung 3 des Behälters 2 und die erste Anschlussleitung 6 abgeleitet. Das erwärmte zweite Prozessgas P₂' kann nun einem industriellen Prozess zur weiteren Nutzung zugeführt werden.

Der Kondensationszyklus (siehe FIG 1) und der Anblaszyklus (siehe FIG 2) werden nun abwechselnd wiederholt an der Vorrichtung 1 durchgeführt. Vor Beginn eines weiteren Kondensationszyklus sind die dritten Öffnungen 5a, 5b wieder freizugeben, damit durch diese kondensiertes Wasser W abfließen kann.

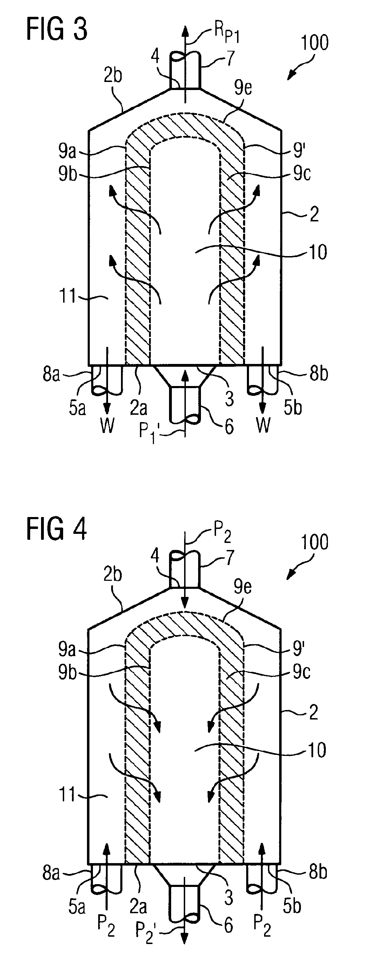

FIG 3 zeigt einen Längsschnitt durch eine zweite Vorrichtung 100 zur Kondensation von Wasser aus Wasserdampf oder einem Wasserdampf enthaltenden Gas im Kondensationszyklus, die ähnlich wie die erste Vorrichtung 1 gemäß FIG 1 aufgebaut ist. Gleiche Bezugszeichen kennzeichnen gleiche Elemente.

Im Inneren des Behälters 2 ist eine Wärmeübergangszone 9' angeordnet, welche das Innere des Behälters 2 in eine erste Zone 10 und eine zweite Zone 11 unterteilt. Die erste Öffnung 3 mündet somit in die erste Zone 10, während die zweite Öffnung 4 sowie die dritten Öffnungen 5a, 5b in die zweite Zone 11 münden. Die Wärmeübergangszone 9' erstreckt sich ausgehend von der Unterseite 2a des Behälters 2 rohrförmig im Inneren des Behälters 2 in Richtung der zweiten Öffnung 4 und endet an ihrem der Unterseite 2a des Behälters 2 abgewandten Ende in Form einer Kuppel 9e. Die Wärmeübergangszone 9' ist insgesamt durchströmbar und mit einer ersten Trennschicht 9a und einer zweiten Trennschicht 9b ausgestattet, je in Form einer Kuppel aus Edelstahlgitter. Zwischen diesen angeordnet und fixiert befindet sich eine Schüttgutschicht 9c aus Graphitgefülltem Kunststoff.

Bei dem Verfahren zur Kondensation von Wasser aus Wasserdampf oder Wasserdampf enthaltendem Gas mittels der Vorrichtung 100 erfolgt zunächst ein Kondensationszyklus, wie bereits zu FIG 1 beschrieben.

FIG 4 zeigt den gleichen Längsschnitt durch die zweite Vorrichtung 100 gemäß FIG 3, jedoch im Anblaszyklus.

Gleiche Bezugszeichen kennzeichnen dabei gleiche Elemente. Im Anblaszyklus wird ein zweites Prozessgas P₂ in Form von Kühlluft über die zweite Anschlussleitung 7 und die zweite Öffnung 4 in die zweite Zone 11 des Behälters 2 eingeleitet. Weiterhin wird das zweite Prozessgas P₂ in Form von Kühlluft auch über die dritten Anschlussleitungen 8a, 8b und die dritten Öffnungen 5a, 5b in die zweite Zone 11 des Behälters 2 eingeleitet, um einen Gegendruck zu erzeugen und ein Entweichen des zweiten Prozessgases P₂ durch die dritten Öffnungen 5a, 5b zu verhindern. Das zweite Prozessgas P₂ wird durch die zuvor mittels des ersten Prozessgases P₁ erwärmte Wärmeübergangszone 9' hindurch in die erste Zone 10 des Behälters 2 überführt (gekennzeichnet durch Pfeile). Dabei erfolgen eine Abkühlung der Wärmeübergangszone 9' und eine Erwärmung des zweiten Prozessgases P₂.

Schließlich wird das erwärmte zweite Prozessgas P₂' durch die erste Öffnung 3 des Behälters 2 und die erste Anschlussleitung 6 abgeleitet. Das erwärmte zweite Prozessgas P₂' kann nun einem industriellen Prozess zur weiteren Nutzung zugeführt werden.

Der Kondensationszyklus (siehe FIG 3) und der Anblaszyklus (siehe FIG 4) werden nun abwechselnd wiederholt an der Vorrichtung 100 durchgeführt. Vor Beginn eines weiteren Kondensationszyklus sind die dritten Öffnungen 5a, 5b wieder freizugeben, damit durch diese kondensierendes Wasser W abfließen kann.

Im Hinblick auf die in den beispielhaft gewählten Figuren gezeigte Ausgestaltung des Behälters, die Anordnung der ersten, zweiten und dritten Öffnungen am Behälter sowie die Form und Ausgestaltung der Wärmeübergangszone bestehen eine Vielzahl weiterer Gestaltungsmöglichkeiten, die ohne erfinderisches Zutun von einem Fachmann alternativ gewählt werden können. Beispielsweise kann ein Behälter nicht nur in aufrecht stehender Position, wie in den Figuren 1 bis 4 dargestellt, sondern auch liegend betrieben werden, wobei die mindestens eine dritte Öffnung in diesem Fall an der tiefsten Stelle des kreisförmigen Umfangs angeordnet wird und die Wärmeübergangszone entsprechend umgestaltet wird.

## Patentansprüche

1. Vorrichtung (1, 100) zur Kondensation von Wasser aus einem ersten Prozessgas in Form von Wasserdampf oder einem Wasserdampf enthaltenden Gas, umfassend
- einen Behälter (2) mit mindestens einer ersten Öffnung (3), mindestens einer zweiten Öffnung (4) und mindestens einer dritten Öffnung (5a, 5b), und
- eine in einem Inneren des Behälters (2) angeordnete Wärmeübergangszone (9, 9'), welche mindestens eine Schüttgutschicht (9c) und/oder mindestens eine Faserschicht und/oder mindestens eine textile Schicht und/oder mindestens eine Gitterschicht und/oder mindestens eine Netzschicht und/oder mindestens ein Lochblech umfasst,
- wobei das Innere des Behälters (2) mittels der Wärmeübergangszone (9, 9') in eine erste Zone (10) und eine zweite Zone (11) unterteilt ist, und wobei die mindestens eine erste Öffnung (3) in die erste Zone (10) mündet und die mindestens eine zweite Öffnung (4) sowie die mindestens eine dritte Öffnung (5a, 5b) in die zweite Zone (11) münden und
- wobei die Wärmeübergangszone (9, 9') zumindest bereichsweise eine offene Porosität und/oder Kanäle aufweist, welche von dem ersten Prozessgas von der ersten Zone (10) in Richtung der zweiten Zone (11) durchströmbar ist und von einem zweiten Prozessgas in Form von Kühlgas in umgekehrter Richtung durchströmbar ist/sind und
- wobei ein durchströmbarer Bereich der Wärmeübergangszone (9,9') zumindest teilweise Materialien aufweist, die in einem Temperaturbereich bis 300°C eine Wärmeleitfähigkeit von größer als 20 W(mK)⁻¹ aufweisen.

2. Vorrichtung nach Anspruch 1, wobei der Behälter (2) eine Längsachse aufweist und wobei die Längsachse sich durch einen Mittelpunkt oder Schwerpunkt der mindestens einen ersten Öffnung (3) und der mindestens einen zweiten Öffnung (4) erstreckt.

3. Vorrichtung nach Anspruch 1 oder Anspruch 2, wobei die mindestens eine erste Öffnung (3) und die mindestens eine dritte Öffnung (5a, 5b) im Bereich einer Unterseite (2a) des Behälters (2) angeordnet sind und weiterhin die mindestens eine zweite Öffnung (4) im Bereich einer Oberseite (2b) des Behälters (2) angeordnet ist.

4. Vorrichtung nach einem der Ansprüche 1 bis 3, wobei die Wärmeübergangszone (9, 9') sich ausgehend von der Unterseite (2a) des Behälters (2) rohrförmig in Richtung der mindestens einen zweiten Öffnung (4) erstreckt.

5. Vorrichtung nach einem der Ansprüche 1 bis 4, wobei die Wärmeübergangszone (9, 9') mindestens eine Schüttgutschicht (9c) und/oder mindestens eine Faserschicht umfasst und wobei die durchströmbaren Bereiche der Wärmeübergangszone (9, 9') auf ihrer der ersten Zone (10) zugewandten Oberfläche und/oder auf ihrer der zweiten Zone zugewandten Oberfläche mit einer Trennschicht (9a, 9b) in Form einer Gitterschicht aus Metalldraht, einer Netzschicht aus Metalldraht oder einem Lochblech ausgebildet sind.

6. Vorrichtung nach einem der Ansprüche 1 bis 5, wobei die Wärmeübergangszone (9) weiterhin eine Isolationsplatte (9d) umfasst, welche für den Wasserdampf oder das Wasserdampf enthaltende Gas undurchlässig ist.

7. Verfahren zur Kondensation von Wasser aus Wasserdampf oder aus einem Wasserdampf enthaltenden Gas, mittels einer Vorrichtung (1, 100) nach einem der Ansprüche 1 bis 6, mit folgenden abwechselnd durchgeführten Zyklen:
Durchführen eines Kondensationszyklus durch Einleiten des ersten Prozessgases in Form von Wasserdampf oder eines Wasserdampf enthaltenden Gases über die mindestens eine erste Öffnung (3) in die erste Zone (10);
überführen des ersten Prozessgases durch die Wärmeübergangszone (9, 9') hindurch in die zweite Zone (11) unter Kondensation von Wasser und Erwärmung der Wärmeübergangszone (9, 9');
Ableiten des kondensierten Wassers durch die mindestens eine dritte Öffnung (5a, 5b) des Behälters (2) und des gasförmigen Rests des Prozessgases durch die mindestens eine zweite Öffnung (4); und
Durchführen eines Anblaszyklus durch Einleiten eines zweiten Prozessgases in Form von Kühlgas über mindestens die mindestens eine zweite Öffnung (4) in die zweite Zone (11);
Überführen des zweiten Prozessgases durch die Wärmeübergangszone (9) hindurch in die erste Zone (10) unter Abkühlung der Wärmeübergangszone (9); und
Ableiten des erwärmten zweiten Prozessgases durch die mindestens eine erste Öffnung (3).

8. Verfahren nach Anspruch 7, wobei im Anblaszyklus vor dem Einleiten des zweiten Prozessgases ein Schließen der mindestens einen dritten Öffnung (5a, 5b) erfolgt und nach Durchführung des Anblaszyklus die mindestens eine dritte Öffnung (5a, 5b) wieder freigegeben wird.

9. Verfahren nach Anspruch 7, wobei im Anblaszyklus das zweite Prozessgases weiterhin über die mindestens eine dritte Öffnung (5a, 5b) in die zweite Zone (11) eingeleitet wird.

## Claims

1. Device (1, 100) for condensing water from a first process gas in the form of water vapor or a gas containing water vapor, comprising
- a container (2) having at least one first opening (3), at least one second opening (4) and at least one third opening (5a, 5b), and
- a heat transfer zone (9, 9') arranged in an interior of the container (2) and comprising at least one bulk material layer (9c) and/or at least one fiber layer and/or at least one textile layer and/or at least one grid layer and/or at least one lattice layer and/or at least one perforated plate,
- wherein the interior of the container (2) is subdivided by means of the heat transfer zone (9, 9') into a first zone (10) and a second zone (11), and wherein the at least one first opening (3) leads into the first zone (10) and the at least one second opening (4) and the at least one third opening (5a, 5b) lead into the second zone (11), and
- wherein the heat transfer zone (9, 9') has at least in sections an open porosity and/or channels through which the first process gas can flow from the first zone (10) in the direction of the second zone (11) and through which a second process gas in the form of cooling gas can flow in the reverse direction and
- wherein a permeable region of the heat transfer zone (9, 9') at least partially comprises materials which have a thermal conductivity of more than 20 W(mK)⁻¹ in a temperature range up to 300°C.

2. Device according to claim 1, wherein the container (2) has a longitudinal axis and wherein the longitudinal axis extends through a center point or center of mass of the at least one first opening (3) and the at least one second opening (4).

3. Device according to claim 1 or 2, wherein the at least one first opening (3) and the at least one third opening (5a, 5b) are arranged in the region of a bottom side (2a) of the container (2) and in addition the at least one second opening (4) is arranged in the region of a top side (2b) of the container (2).

4. Device according to one of claims 1 to 3, wherein, starting from the bottom side (2a) of the container (2), the heat transfer zone (9, 9') extends tubularly in the direction of the at least one second opening (4).

5. Device according to one of claims 1 to 4, wherein the heat transfer zone (9, 9') comprises at least one bulk material layer (9c) and/or at least one fiber layer and wherein the permeable regions of the heat transfer zone (9, 9') are constructed on their surface facing the first zone (10) and/or on their surface facing the second zone with a separating layer (9a, 9b) in the form of a grid layer made of metal wire, a lattice layer made of metal wire or a perforated plate.

6. Device according to one of claims 1 to 5, wherein the heat transfer zone (9) also comprises an insulation panel (9d) which is impermeable to the water vapor or to the gas containing water vapor.

7. Method for condensing water from water vapor or a gas containing water vapor by means of a device (1, 100) according to one of claims 1 to 6, comprising the following alternately executed cycles:
performing a condensation cycle by
introducing the first process gas in the form of water vapor or a gas containing water vapor via the at least one first opening (3) into the first zone (10);
transferring the first process gas through the heat transfer zone (9, 9') into the second zone (11) with condensation of water and heating of the heat transfer zone (9, 9');
discharging the condensed water through the at least one third opening (5a, 5b) of the container (2) and the gaseous residue of the process gas through the at least one second opening (4); and
performing a blowing cycle by
introducing a second process gas in the form of cooling gas via at least the at least one second opening (4) into the second zone (11);
transferring the second process gas through the heat transfer zone (9) into the first zone (10) with cooling of the heat transfer zone (9); and
discharging the heated second process gas through the at least one first opening (3).

8. Method according to claim 7, wherein during the blowing cycle the at least one third opening (5a, 5b) is closed before the second process gas is introduced and after the blowing cycle has been completed the at least one third opening (5a, 5b) is opened again.

9. Method according to claim 7, wherein during the blowing cycle the second process gas is furthermore introduced via the at least one third opening (5a, 5b) into the second zone (11).

## Revendications

1. Dispositif ( 1, 100 ) de condensation d'eau d'un premier gaz de processus sous la forme de vapeur d'eau ou d'un gaz contenant de la vapeur d'eau, comprenant
- un récipient ( 2 ) ayant au moins une première ouverture ( 3 ), au moins une deuxième ouverture ( 4 ) et au moins une troisième ouverture ( 5a, 5b ), et
- une zone ( 9, 9' ) de transmission de la chaleur, qui est disposée à l'intérieur du récipient ( 2 ) et qui comprend au moins une couche ( 9c ) de produit en vrac et/ou au moins une couche de fibres et/ou au moins une couche textile et/ou au moins une couche grillagée et/ou au moins une couche réticulée et/ou au moins une tôle perforée,
- dans lequel l'intérieur du récipient ( 2 ) est subdivisé au moyen de la zone ( 9, 9' ) de transmission de la chaleur en une première zone ( 10 ) et en une deuxième zone ( 11 ) et dans lequel la au moins une première ouverture ( 3 ) débouche dans la première zone ( 10 ) et la au moins une deuxième ouverture ( 4 ) ainsi que la au moins une troisième ouverture ( 5a, 5b ) débouchent dans la deuxième zone ( 11 ) et
- dans lequel la zone ( 9, 9' ) de transmission de la chaleur a, au moins par endroit, une porosité ouverte et/ou des canaux, qui peuvent être parcourus par le premier gaz de processus de la première zone ( 10 ) en direction de la deuxième zone ( 11 ) et qui peut/peuvent être parcourus par un deuxième gaz de processus sous la forme d'un gaz de refroidissement dans le sens contraire et
- dans lequel une partie qui peut être parcourue de la zone ( 9, 9' ) de transfert de la chaleur a, au moins en partie, des matériaux, qui ont une conductibilité calorifique supérieure 20 W(mK)⁻¹ dans une plage de température allant jusqu'à 300°C.

2. Dispositif suivant la revendication 1, dans lequel le récipient ( 2 ) a un axe longitudinal et dans lequel l'axe longitudinal passe par un point médian ou un centre de gravité de la au moins une première ouverture ( 3 ) et de la au moins une deuxième ouverture ( 4 ).

3. Dispositif suivant la revendication 1 ou la revendication 2, dans lequel la au moins une première ouverture ( 3 ) et la au moins une troisième ouverture ( 5a, 5b ) sont disposées dans la partie d'un côté ( 2a ) inférieur du récipient ( 2 ) et, en outre, la au moins une deuxième ouverture ( 4 ) est disposée dans la partie d'un côté ( 2b ) supérieur du récipient ( 2 ).

4. Dispositif suivant l'une des revendications 1 à 3, dans lequel la zone ( 9, 9' ) de transmission de la chaleur s'étend tubulairement en direction de la au moins une deuxième ouverture ( 4 ) à partir du côté ( 2a ) inférieur du récipient ( 2 ).

5. Dispositif suivant l'une des revendications 1 à 4, dans lequel la zone ( 9, 9' ) de transmission de la chaleur comprend au moins une couche ( 9c ) de produit en vrac et/ou au moins une couche de fibres et les parties qui peuvent être parcourues de la zone ( 9, 9' ) de transmission de la chaleur sont formées, sur leur surface tournée vers la première zone ( 10 ) et/ou sur leur surface tournée vers la deuxième zone, d'une couche ( 9a, 9b ) de séparation, sous la forme d'une couche grillagée en fil métallique, d'une couche réticulée en fil métallique ou d'une tôle perforée.

6. Dispositif suivant l'une des revendications 1 à 5, dans lequel la zone ( 9 ) de transmission de la chaleur comprend, en outre, une plaque ( 9d ) isolante, qui est imperméable à la vapeur d'eau ou à du gaz contenant de la vapeur d'eau.

7. Procédé de condensation d'eau à partir de vapeur d'eau ou d'un gaz contenant de la vapeur d'eau au moyen d'un dispositif ( 1, 100 ) suivant l'une des revendications 1 à 6, comprenant les cycles suivants effectués en alternance :
on effectue un cycle de condensation par envoi du premier gaz de processus sous la forme de vapeur d'eau ou d'un gaz contenant de la vapeur d'eau par l'intermédiaire de la au moins une première ouverture ( 3 ) dans la première zone ( 10 ) ;
on fait passer le premier gaz de processus, par la zone ( 9, 9' ) de transmission de la chaleur, dans la deuxième zone ( 11 ) avec condensation de l'eau et échauffement de la zone ( 9, 9' ) de transmission de la chaleur ;
on évacue l'eau condensée par la au moins une troisième ouverture ( 5a, 5b ) du récipient ( 2 ) et le reste gazeux du gaz de processus par la au moins une deuxième ouverture ( 4 ) ; et
on effectue un cycle d'insufflation par envoi d'un deuxième gaz de processus sous la forme de gaz de refroidissement par au moins la au moins une deuxième ouverture ( 4 ) dans la deuxième zone ( 11 ) ;
on transfère le deuxième gaz de processus par la zone ( 9 ) de transmission de la chaleur dans la première zone ( 10 ) en refroidissant la zone ( 9 ) de transmission de la chaleur ; et on évacue le deuxième gaz de processus échauffé par la au moins une première ouverture ( 3 ).

8. Procédé suivant la revendication 7, dans lequel, dans le cycle d'insufflation, avant l'envoi du deuxième gaz de processus, on effectue une fermeture de la au moins une troisième ouverture ( 5a, 5b ) et, après avoir effectué le cycle d'insufflation, on redégage la au moins une troisième ouverture ( 5a, 5b ).

9. Procédé suivant la revendication 7, dans lequel, dans le cycle d'insufflation, on continue à envoyer le deuxième gaz de processus par la au moins une troisième ouverture ( 5a, 5b ) dans la deuxième zone ( 11 ).
